(19) Europäisches Patentamt
European Patent Office
Office européen des brevets

(11) **EP 3 299 187 A1**

(12) **EUROPEAN PATENT APPLICATION**

(43) Date of publication:
**28.03.2018 Bulletin 2018/13**

(51) Int Cl.:
***B60C 23/12*** *(2006.01)*

(21) Application number: **17191677.8**

(22) Date of filing: **18.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.09.2016 US 201662398917 P**

(71) Applicant: **The Goodyear Tire & Rubber Company
Akron, OH 44316 (US)**

(72) Inventor: **LIN, Cheng-Hsiung
Hudson, OH Ohio 44236 (US)**

(74) Representative: **Kutsch, Bernd
Goodyear S.A.
Patent Department
Avenue Gordon Smith
7750 Colmar-Berg (LU)**

(54) **RIM ASSEMBLY AND AIR MAINTENANCE SYSTEM**

(57)    A rim assembly is disclosed comprising a first and second pump assembly (110, 120) mounted to a wheel rim (200), the first pump assembly (110) and second pump assembly (120) each having a piston (117, 125) mounted in a chamber (111, 121), and an external mass (104) being connected to each piston (117, 125), wherein the external mass (104) is configured to operates the pump assemblies (110, 120) during rotation of the rim (200). Also, a pneumatic tire and rim assembly comprising such a rim assembly is disclosed that may serve as air maintenance system (10) for use with a pneumatic tire (15) mounted on a wheel rim (200) to keep the pneumatic tire (15) from becoming underinflated.

FIG. 1

## Description

Field of the Invention

The present invention relates generally to a rim assembly and to an air maintenance system for use with a tire and, more specifically, to an air maintenance pumping assembly.

Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

Definitions

"Axial" and "axially" means lines or directions that are parallel to the axis of rotation of the tire or rim.
"Circumferential" means lines or directions extending along the perimeter of the surface of the annular tread perpendicular to the axial direction.
"Equatorial Centerplane (CP)" means the plane perpendicular to the tire's axis of rotation and passing through the center of the tread.
"Lateral" means an axial direction.
"Radial" and "radially" means directions radially toward or away from the axis of rotation of the tire or rim.

Summary of the Invention

The invention relates to a rim assembly in accordance with claim 1, to a pneumatic ire and rim assembly in accordance with claim 13 and to an air maintenance system in accordance with claim 15.
Dependent claims refer to preferred embodiments of the invention.

Brief Description of the Drawings

The invention will be described by way of example and with reference to the accompanying drawings in which:

Figure 1 illustrates a schematic sectional view of part of a tire in accordance with the present invention.
Figure 2 illustrates a close-up perspective view of a pump of the present invention.
Figure 3 illustrates the pump system of Figure 1 shown with the components in cross-section.
Figure 4 illustrates a double channel connector of the present invention.
Figure 5 illustrates a cross-sectional view of the double channel connector of the present invention.
Figure 6 illustrates an exploded view of the double channel connector of the present invention.
Figure 7 illustrates a schematic of a first embodiment of a pump system of the present invention utilizing two double chamber pumps operated by an external mass.
Figure 8 illustrates a schematic of a second embodiment of a pump system of the present invention utilizing two single chamber pumps operated by an external mass.
Figure 9A illustrates a perspective view of a third embodiment of a pump system of the present invention, while Figure 9B illustrates the bottom view of Figure 9A.

Detailed Description of Example Embodiments of the Invention

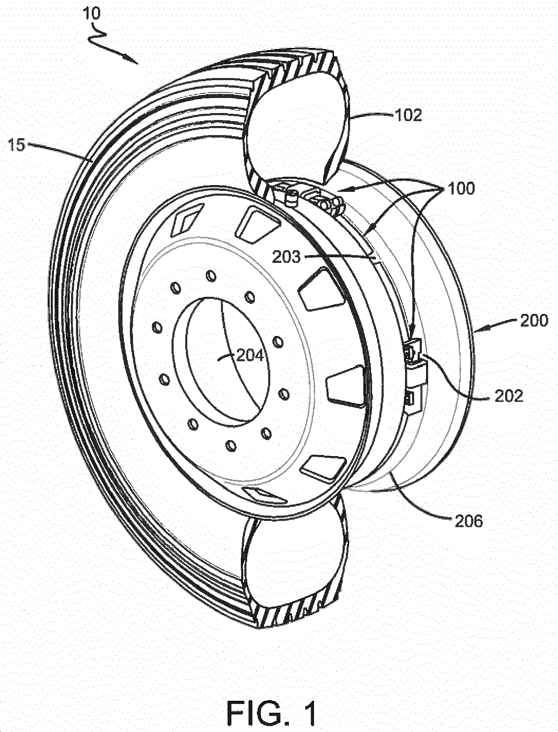

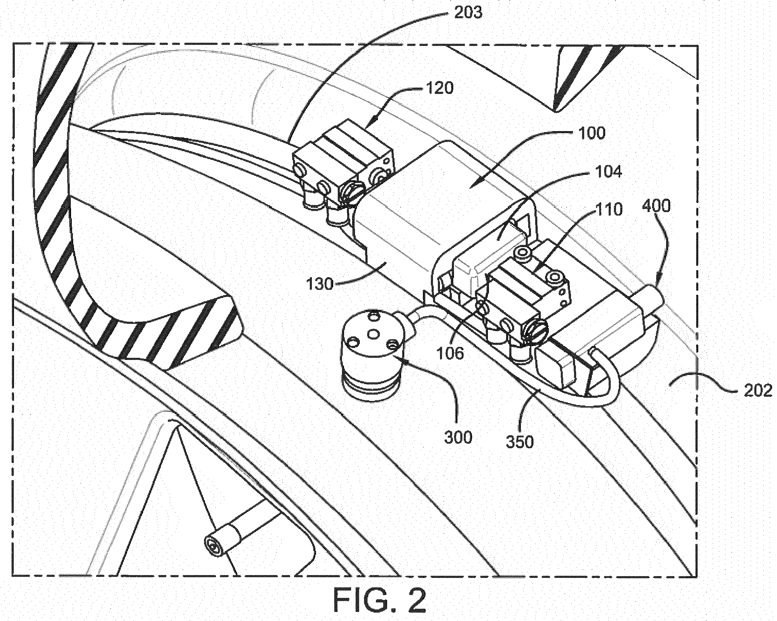

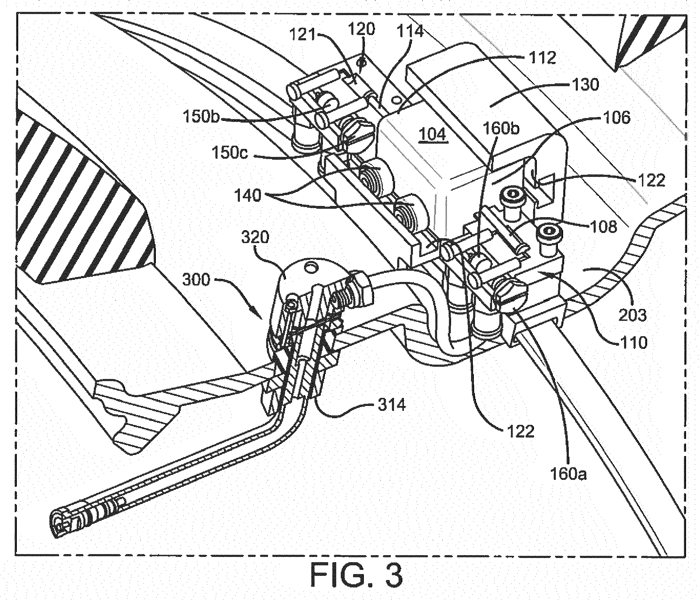

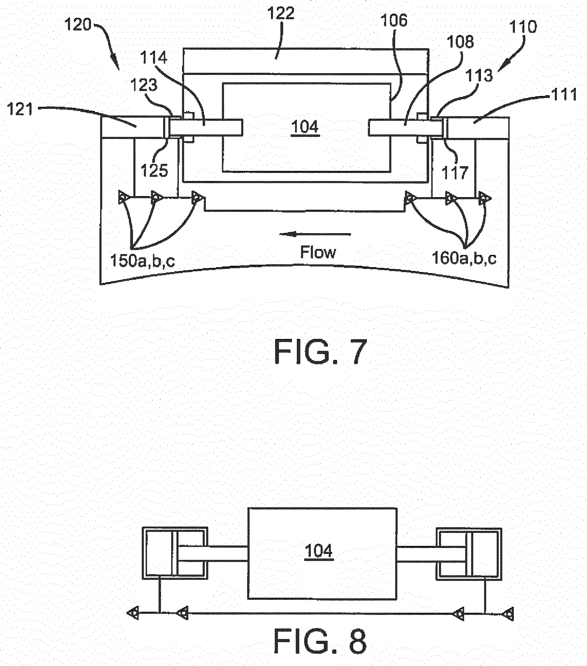

In one embodiment, invention is directed to an air maintenance system 10 as shown in Figure 1. The air maintenance system includes one or more pump assemblies 100 that may be used to pump air to a tire. The tire may be a conventional tire that mounts in conventional fashion to a rim 200 comprising a pair of rim mounting surfaces 204 and a rim body 206. The rim 200 supports the tire assembly. The tire has a pair of sidewalls extending from opposite bead areas to a crown or tire bead region. The tire 15 and rim 200 enclose a tire cavity 102.
The pump assembly 100 of the present invention is mounted to an inner surface 202 of the tire rim 200 that is located inside the tire cavity 102. The rim may preferably comprise a U-shaped groove 203 for mounting the pump assembly 100. The pump assembly may alternatively be located on the outer rim surface 204, opposite the inner surface 202.
The pump assembly 100 as shown in Figures 2-3, includes an external sliding mass 104. The external sliding mass 104 has a first end 106 connected to a first piston 108 of a first pump 110. The sliding mass 104 has a second end 112 connected to a second piston 114 of a second pump 120. The sliding mass 104 preferably slides in a linear direction, and may be mounted in a groove or track 122 of a mounting sleeve 130. More preferably, the sliding mass 104 has wheels or bearings 140 to reduce the friction of the sliding mass 103 within the track 122. When the sliding mass slides, the pistons 108, 114 compress the air in the chambers.
Preferably, each pump 110, 120 is a double chamber pump having two chambers. Thus, first pump 110 has first pump chamber 111 and second pump chamber 113. The second pump 120 has first pump chamber 121 and second pump chamber 123. Each piston 108, 114 forms a seal to allow for the two internal chambers of each pump. Figures 3 and 7 illustrate that each pump 110, 120 is preferably in fluid communication with one or more check valves 150, 160. As shown in Figure 7, the direction of flow is shown from right to left. Preferably, a check valve 160c is located upstream of the first chamber 111 of the first pump 110. Flow from the first pump chamber is directed into the second pump chamber 113 (ie, the chambers are connected in series). Preferably, an optional check valve 160b is located between the first chamber 111 and the second chamber 113. Preferably, an optional check valve 160a is located downstream of the second chamber 113. Flow from the second chamber 113 of the first pump 110 is then directed to the second chamber 123 of the second pump 120. Preferably, an optional check valve 150c is located upstream of the first chamber. The flow is then directed from the second chamber 123 of the second pump into the first chamber 121 of the second pump. An optional check valve 150b is preferably located in the flow path between the two chambers. Flow from the first chamber 121 is then directed through an optional check valve 150a. If only one pump assembly 100 is used, then the output flow from the pump assembly 100 is directed into the tire cavity.

Preferably, there are at least two pump assemblies 100 with each pump chamber connected in series.

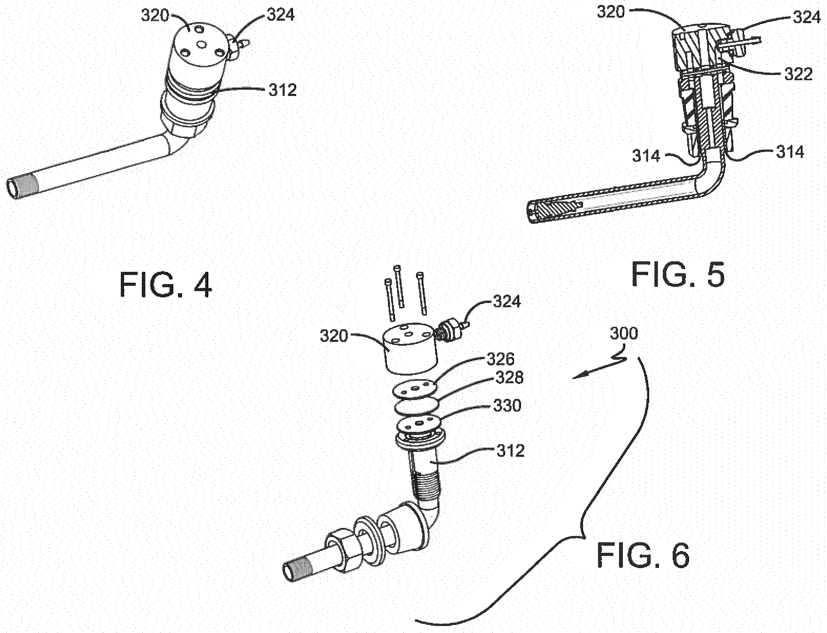

Airflow is introduced into the pump assembly 100 via a modified valve stem assembly 300. The pump assembly 100 may optionally include an inlet control valve 400 that opens flow to the pump system when the tire cavity pressure is below a threshold set pressure. The modified valve stem assembly 300 in shown in Figures 4-6. The modified valve stem assembly 300 provides air from the outside to be pumped in the pump assemblies 100. The modified valve stem assembly allows the standard valve stem function to allow air to be filled in the tire the conventional way and to allow for the tire pressure to be checked in the conventional way. The valve stem body 312 has been modified to include one or more passageways 314 that communicates outside air through the body 312 and into flow channels 322 of a double channel connector 320. As the outside air travels through the passageways 314, it is filtered by filter 328. A first and second gasket 326, 330 prevents leakage. The double channel connector 320 has an adaptor 324 for connecting to a tube 350. The tube 350 is preferably connected to an inlet control valve 400. The inlet control valve senses the tire cavity pressure, and if the cavity pressure is below the threshold level, the inlet control valve allows the air to pass through to the pump assemblies 100. If the tire pressure is above the threshold, the inlet control valves remains closed.

Preferably, there are at least two pump assemblies 100 connected together, i.e., in series. Due to an amplification effect, the compression of the pump assembly may be defined as:

$$R = (r)^{2n}$$

*where*

R: system compression ratio
r: single chamber compression ratio
n: number of pump in the system

Thus, a high compression ratio for each pump chamber is not necessary to achieve a high compression ratio (e.g., low force and/or deformation may produce high compression).

The pump assembly of the present invention is bi-directional. Hence, the rotation direction or installation direction will not have significant effect on pumping performance.

The pump driving mechanism of the present invention is based on gravitation change of the external mass during tire rotation. As the wheel is rotated, the pistons move forward and backward per revolution that provided high pumping frequency. Higher vehicle speed provides higher pumping frequency. The pumping action only depends on the external mass, and will not be affected by tire load or any other external conditions.

Figure 8 is an alternate embodiment of the present invention. Instead of each pump having a dual chamber, the invention may also provide for single chamber pumps which are driven by an external mass. Two single chamber pumps are connected together in series, and are driven by a single external mass that drives the pistons to compress the air in the respective chambers. Check valves may be used as shown to prevent backflow.

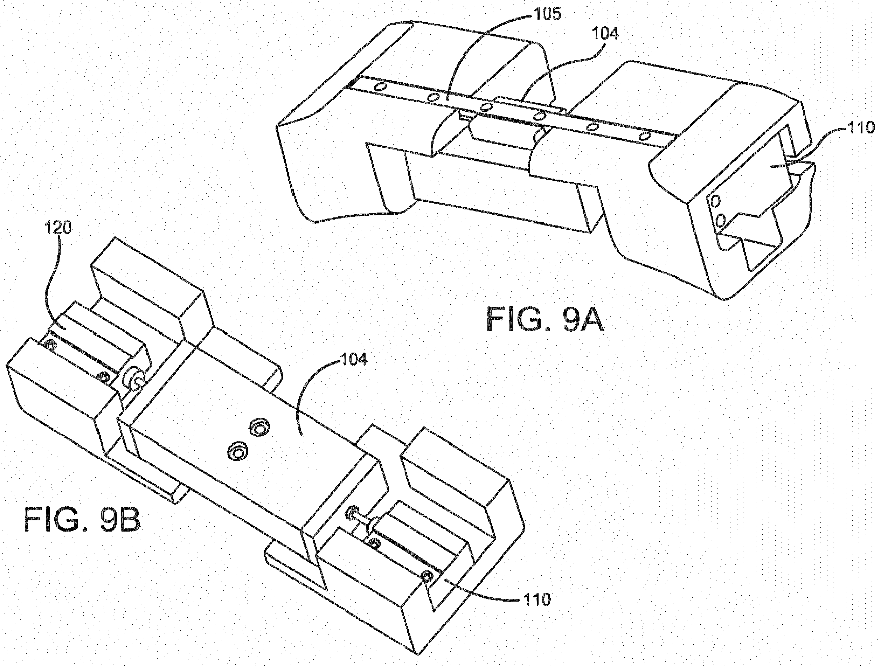

Figures 9A and 9B illustrate an alternate embodiment of the present invention in which a sliding weight 104 is mounted upon a rail 105, so that the motion of the sliding weight is constrained in a linear direction.

**Claims**

1. A rim assembly comprising a first and second pump assembly (110, 120) mounted to a wheel rim (200), the first pump assembly (110) and second pump assembly (120) each having a piston (108, 114) mounted in a chamber (111, 121), and an external mass (104) being connected to each piston (108, 114), wherein the external mass (104) is configured to operates the pump assemblies (110, 120) during rotation of the rim (200).

2. The rim assembly of claim 1 further including an inlet control valve (400) for controlling inlet air into at least one of the pump assemblies (110, 120).

**3.** The rim assembly of claim 1 or 2 further including a plurality of check valves (150a, 150b, 160a, 160b, 160c) for maintaining air flow in the pump assemblies (110, 120) in a single direction.

**4.** The rim assembly of at least one of the previous claims wherein the first and second pump assembly (110, 120) are connected in series.

**5.** The rim assembly of at least one of the previous claims wherein a check valve (150a, 150b, 160a, 160b, 160c) is provided between the first and second pump assembly (110, 120).

**6.** The rim assembly of at least one of the previous claims wherein the first pump assembly (110) has said piston (108) as first piston (108) mounted in the first pump assembly (110) forming a first chamber (111) and a second chamber (113) and wherein the second pump assembly (120) has said piston (114) as second piston (114) mounted in the second pump assembly (120) forming a third chamber (121) and a fourth chamber (123), wherein the external mass (104) is connected to the first and the second piston (108, 114).

**7.** The rim assembly of at least one of the previous claims wherein the first piston (108) has a seal to prevent flow from leaking from the first chamber (111) to the second chamber (113).

**8.** The rim assembly of at least one of the previous claims 6 or 7 further including a plurality of check valves (150a, 150b, 160a, 160b, 160c) for maintaining air flow in each pump assembly (110, 120) in a single direction.

**9.** The rim assembly of at least one of the previous claims wherein the first and second chambers (111, 113) are connected in series and/or wherein the third and fourth chambers (121, 123) are connected in series.

**10.** The rim assembly of at least one of the previous claims wherein all of the chambers (111, 113, 121, 123) are connected in series, and, optionally, separated from a respective adjacent chamber by a check valve (150a, 150b, 160a, 160b, 160c).

**11.** The rim assembly of at least one of the previous claims wherein a check valve is provided between the first and second pump assembly (110, 120).

**12.** The rim assembly of at least one of the previous claims wherein the external mass (104) slides on a rod or in a track; and/or wherein the external mass (104) has one or more wheels.

**13.** A pneumatic tire and rim assembly comprising the rim assembly in accordance with at least one of the previous claims and a pneumatic tire (15) mounted to the rim assembly.

**14.** The pneumatic tire and rim assembly as set forth in claim 14 wherein the assembly is designed such that a load on the pneumatic tire (15) does not affect frequency of pumping action of the pump assemblies (110, 120).

**15.** An air maintenance system for use with a pneumatic tire mounted on a wheel rim to keep the pneumatic tire from becoming underinflated, the air maintenance system comprising the rim assembly in accordance with at least one of the previous claims 1 to 12 and a pneumatic tire (15) mounted to the rim assembly.

FIG. 1

FIG. 2

FIG. 3

EP 3 299 187 A1

FIG. 4

FIG. 5

FIG. 6

## FIG. 7

120  122  106  110
114  108
123  113
121  111
125  117
104
150a,b,c  Flow  160a,b,c

## FIG. 8

104

FIG. 9A

FIG. 9B

Europäisches
Patentamt

European
Patent Office

Office européen
des brevets

**EUROPEAN SEARCH REPORT**

Application Number

EP 17 19 1677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/19271 A1 (VERTIGO INC [US]) 20 July 1995 (1995-07-20) | 1,6,7, 13-15 | INV. B60C23/12 |
| Y | * page 9, line 5 - page 10, line 4; figures 1-3 * | 2-5,8-11 | |
| X | US 5 409 049 A (RENIER GRANT J [US]) 25 April 1995 (1995-04-25) * figures 1-3 * | 1,12 | |
| Y | EP 2 942 211 A1 (GOODYEAR TIRE & RUBBER [US]) 11 November 2015 (2015-11-11) * paragraph [0026] - paragraph [0034]; figures 1-7 * | 2-5,8-11 | |

TECHNICAL FIELDS
SEARCHED     (IPC)

B60C

The present search report has been drawn up for all claims

| Place of search | Date of completion of the search | Examiner |
|---|---|---|
| Munich | 9 January 2018 | Billen, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 19 1677

This annex lists the patent family members relating to the patent documents cited in  the above-mentioned European search report.
The members are as contained in the European Patent Office EDP file on
The European Patent Office is in no way liable for these particulars which are merely given for the purpose of information.

09-01-2018

| Patent document cited in search report | | Publication date | Patent family member(s) | | Publication date |
|---|---|---|---|---|---|
| WO 9519271 | A1 | 20-07-1995 | EP | 0737134 A1 | 16-10-1996 |
| | | | JP | H09508870 A | 09-09-1997 |
| | | | US | 5556489 A | 17-09-1996 |
| | | | WO | 9519271 A1 | 20-07-1995 |
| US 5409049 | A | 25-04-1995 | NONE | | |
| EP 2942211 | A1 | 11-11-2015 | BR | 102015009569 A2 | 26-07-2016 |
| | | | CN | 105082905 A | 25-11-2015 |
| | | | EP | 2942211 A1 | 11-11-2015 |
| | | | JP | 2015212140 A | 26-11-2015 |
| | | | US | 2015314658 A1 | 05-11-2015 |

EPO FORM P0459

For more details about this annex : see Official Journal of the European Patent Office, No. 12/82